(19) Europäisches Patentamt
European Patent Office
Office européen des brevets

(11) **EP 3 901 911 A1**

(12) **EUROPEAN PATENT APPLICATION**

(43) Date of publication:
**27.10.2021 Bulletin 2021/43**

(21) Application number: **20171144.7**

(22) Date of filing: **23.04.2020**

(51) Int Cl.:
**G06T 7/62** *(2017.01)*     **G06T 7/60** *(2017.01)*
**G06T 7/70** *(2017.01)*     **G06T 7/80** *(2017.01)*
**G06T 7/11** *(2017.01)*     **G06T 7/55** *(2017.01)*
**G01B 21/02** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventor: **HO, Man Ling
Hong Kong (HK)**

(74) Representative: **Isarpatent
Patent- und Rechtsanwälte Barth
Charles Hassa Peckmann & Partner mbB
Friedrichstrasse 31
80801 München (DE)**

(54) **OBJECT MEASUREMENT METHOD AND DEVICE THEREOF**

(57)     The present invention provides an object measurement method. The object measurement method includes: obtaining N images of an object at a same time from different angles of view, wherein N is a natural number greater than 3, and the N images are shot by a plurality of cameras; calibrating the plurality of cameras to obtain an intrinsic parameter and extrinsic parameters of each camera; conducting image segmentation on the N images by utilizing a trained Mask-RCNN model to obtain two-dimensional regions of interest; and projecting the corresponding two-dimensional regions of interest into a world coordinate system by utilizing the intrinsic parameter and the extrinsic parameters of each camera to obtain world coordinates of three-dimensional feature points of the object, and determining reconstruction dimensions of the object according to the world coordinates of the three-dimensional feature points.

FIG. 1

EP 3 901 911 A1

## Description

## Technical field

The present invention mainly relates to the field of image processing, in particular to an object measurement method and a device thereof.

## Background art

In the logistics industry, the dimensions of cargoes are important logistics information. A traditional way for measuring the dimensions of the cargoes manually needs investment of massive manpower, has low measurement speed and large error, and needs employee training, and security-related risks will further be caused by measuring the dimensions of the cargoes by employees at close range.

In order to overcome the problems caused by manual measurement, there are mainly three automatic measurement ways in the existing technology. One automatic measurement way is laser measurement, and the laser measurement is relatively high in precision, but needs introduction of laser equipment, which causes a relatively high measurement cost. Another automatic measurement way is structured light measurement, and the structured light measurement has very high precision during close-range measurement, but decreased exponentially during long-range measurement, and is extremely prone to being affected by illumination. The third automatic measurement way is Time of Flight (ToF) measurement, the ToF measurement has relatively high precision during close-range measurement and middle-long range measurement, but ToF cameras have a low resolution generally, which causes a relatively large error in measurement result.

## Content of the invention

In order to solve the above technical problems, the present invention provides an object measurement method and a device thereof so as to improve accuracy and precision of object measurement, and reduce measurement cost simultaneously.

In order to implement the above objective, the present invention provides an object measurement method. The object measurement method includes: obtaining N images of an object at a same time from different angles of view, wherein N is a natural number greater than 3, and the N images are shot by a plurality of cameras; calibrating the plurality of cameras to obtain an intrinsic parameter and extrinsic parameters of each camera; conducting image segmentation on the N images by utilizing a trained Mask-RCNN model to obtain two-dimensional regions of interest; and projecting the corresponding two-dimensional regions of interest into a world coordinate system by utilizing the intrinsic parameter and the extrinsic parameters of each camera to obtain world coordinates of three-dimensional feature points of the object, and determining reconstruction dimensions of the object according to the world coordinates of the three-dimensional feature points. Therefore, conducting image segmentation by utilizing the Mask-RCNN model may improve precision and accuracy of image segmentation, and reduce measurement cost simultaneously. Segmented images are mapped into a unified world coordinate system by utilizing the intrinsic parameters and the extrinsic parameters of the cameras to determine the reconstruction dimensions of the object, and thus realizing low-cost high-precision measurement, and improving cost performance of measurement.

In an embodiment of the present invention, obtaining the world coordinates of the three-dimensional feature points of the object further includes: conducting homograph and texture-gradient analysis on the three-dimensional feature points. Therefore, conducting homograph and texture-gradient analysis on the three-dimensional feature points may exclude pseudo three-dimensional feature points and improve accuracy of the three-dimensional feature points, and thus improving accuracy of measurement.

In an embodiment of the present invention, the object measurement method further includes: obtaining predetermined dimensions of the object; and evaluating the object according to magnitude relationships between the reconstruction dimensions and the predetermined dimensions. Therefore, the object may be evaluated by comparing the reconstruction dimensions and the predetermined dimensions.

In an embodiment of the present invention, the object is a cargo. The reconstruction dimensions include a reconstruction length, a reconstruction width and a reconstruction height. The object measurement method further includes: obtaining a predetermined length, a predetermined width and a predetermined height of the object; and evaluating whether the cargo meets transportation requirements or not according to a magnitude relationship between the reconstruction length and the predetermined length, a magnitude relationship between the reconstruction width and the predetermined width as well as a magnitude relationship between the reconstruction height and the predetermined height. Therefore, transportation of the cargo object may be evaluated by comparing the reconstruction length and the predetermined length, the reconstruction width and the predetermined width as well as the reconstruction height and the predetermined height.

In an embodiment of the present invention, calibrating the plurality of cameras to obtain the intrinsic parameter and the extrinsic parameters of each camera includes: calibrating the plurality of cameras to obtain the intrinsic parameter of each camera; and obtaining the extrinsic parameters of each camera by utilizing the intrinsic parameter of each camera. Therefore, calibration of the intrinsic parameters and the extrinsic parameters of the cameras may be realized.

The present invention further provides an object measurement device. The object measurement device includes: an image obtaining unit, configured to obtain N images of an object at a same time from different angles of view, wherein N is a natural number greater than 3, and the N images are shot by a plurality of cameras; a camera calibrating unit, configured to calibrate the plurality of cameras to obtain intrinsic parameter and extrinsic parameters of each camera; an image segmentation unit, configured to conduct image segmentation on the N images by utilizing a trained Mask-RCNN model to obtain two-dimensional regions of interest; and a calculation unit, configured to project the corresponding two-dimensional regions of interest into a world coordinate system by utilizing the intrinsic parameter and the extrinsic parameters of each camera to obtain world coordinates of three-dimensional feature points of the object, and determining reconstruction dimensions of the object according to the world coordinates of the three-dimensional feature points. Therefore, conducting image segmentation by utilizing the Mask-RCNN model may improve precision and accuracy of image segmentation, and reduce measurement cost simultaneously. Segmented images are mapped into a unified world coordinate system by utilizing the intrinsic parameters and the extrinsic parameters of the cameras to determine the reconstruction dimensions of the object, and thus realizing low-cost high-precision measurement, and improving cost performance of measurement.

In an embodiment of the present invention, after obtaining the world coordinates of the three-dimensional feature points of the object, the calculation unit conducts homograph and texture-gradient analysis on the three-dimensional feature points. Therefore, conducting homograph and texture-gradient analysis on the three-dimensional feature points may exclude pseudo three-dimensional feature points and improve accuracy of the three-dimensional feature points, and thus improving accuracy of measurement.

In an embodiment of the present invention, the object measurement device further includes an evaluation unit. The evaluation unit obtains predetermined dimensions of the object; and evaluates the object according to magnitude relationships between the reconstruction dimensions and the predetermined dimensions. Therefore, the object may be evaluated by comparing the reconstruction dimensions and the predetermined dimensions.

In an embodiment of the present invention, the evaluation unit is a cargo evaluation unit. The reconstruction dimensions include a reconstruction length, a reconstruction width and a reconstruction height. The cargo evaluation unit obtains a predetermined length, a predetermined width and a predetermined height of the object; and evaluates whether the cargo meets transportation requirements or not according to a magnitude relationship between the reconstruction length and the predetermined length, a magnitude relationship between the reconstruction width and the predetermined width as well as a magnitude relationship between the reconstruction height and the predetermined height. Therefore, transportation of the cargo object may be evaluated by comparing the reconstruction length and the predetermined length, the reconstruction width and the predetermined width as well as the reconstruction height and the predetermined height.

In an embodiment of the present invention, calibrating the plurality of cameras by the camera calibrating unit to obtain the intrinsic parameter and the extrinsic parameters of each camera includes: calibrating the plurality of cameras to obtain the intrinsic parameter of each camera; and obtaining the extrinsic parameters of each camera by utilizing the intrinsic parameter of each camera. Therefore, calibration of the intrinsic parameters and the extrinsic parameters of the cameras may be realized.

The present invention further provides an electronic device, including a processor, a memory and an instruction stored in the memory, wherein the object measurement method as mentioned above is performed when the instruction is operated by the processor.

The present invention further provides a computer readable storage medium, storing a computer instruction, wherein the object measurement method as mentioned above is performed when the computer instruction is operated.

**Description of the accompanying drawings**

The following accompanying drawings are only intended to exemplarily illustrate and explain the present invention, and do not limit the scope of the present invention. Where:

FIG. 1 is a flow diagram of an object measurement method according to an embodiment of the present invention;

FIG. 2 is a flow diagram of a method for calibrating intrinsic parameters and extrinsic parameters of cameras according to an embodiment of the present invention; and

FIG. 3 is a block diagram of an object measurement device according to an embodiment of the present invention.

Description of reference numerals

| | |
|---|---|
| 100 | object measurement method |
| 110 to 140 | steps |
| 200 | method for calibrating intrinsic parameters and extrinsic parameters of cameras |

210 to 220    steps

300    object measurement device

310    image obtaining unit

320    camera calibrating unit

330    image segmentation unit

340    calculation unit

350    evaluation unit

**Particular embodiments**

For a clearer understanding of the technical features, objectives and effects of the present invention, specific embodiments of the present invention are described with reference to the accompanying drawings.

Many specific details are described below for a full understanding of the present invention, but the present invention may also be implemented in other ways than those described herein, so that the present invention is not limited by the specific embodiments disclosed below.

As shown in the present invention and the claims, unless the context clearly indicates an exception, the terms "one", "a/an", and/or "the" do not specifically refer to the singular but may include the plural. In general, the term "include/comprise" only suggests steps and elements that have been clearly identified, these steps and elements do not constitute an exclusive list, and the method or device may also include other steps or elements.

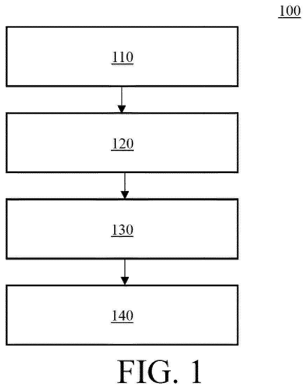

The present invention provides an object measurement method. FIG. 1 is a flow diagram of an object measurement method 100 according to an embodiment of the present invention. As shown in FIG. 1, the object measurement method 100 includes:

Step 110, N images of an object at a same time from different angles of view are obtained, N is a natural number greater than 3, and the N images are shot by a plurality of cameras.

In this step, the N images from the different angles of view are obtained, and N is the natural number greater than 3, that is, at least four images from the different angles of view are obtained. N pictures correspond to the same object at the same time, that is, the same object is shot simultaneously by adopting the plurality of cameras. One camera may shoot one picture, and may also obtain a plurality of pictures. When the plurality of pictures are shot, the picture with relatively high sharpness is selected to be used for subsequent steps.

As an example, four cameras may be arranged at front, rear, left and right orientations of an object, and are Cam0, Cam1, Cam2 and Cam3 respectively. The cameras Cam0, Cam1, Cam2 and Cam3 shoot the object simultaneously to obtain four images img1, img2, img3 and img4 from different angles of view respectively. In order to simplify descriptions, the object measurement method in the embodiment of the present invention is described below with the four images as an example.

Step 120, the plurality of cameras are calibrated to obtain an intrinsic parameter and extrinsic parameters of each camera.

In this step, the intrinsic parameters and the extrinsic parameters of the cameras Cam0, Cam1, Cam2 and Cam3 may be obtained by local calculation, and may also be obtained by remote cloud calculation. For example, the images shot by the cameras Cam0, Cam1, Cam2 and Cam3 may be sent to a cloud server. The intrinsic parameters and the extrinsic parameters of the cameras Cam0, Cam1, Cam2 and Cam3 are obtained through calculation of the cloud server. Then, the calculated intrinsic parameters and extrinsic parameters are transferred back to local calculation equipment.

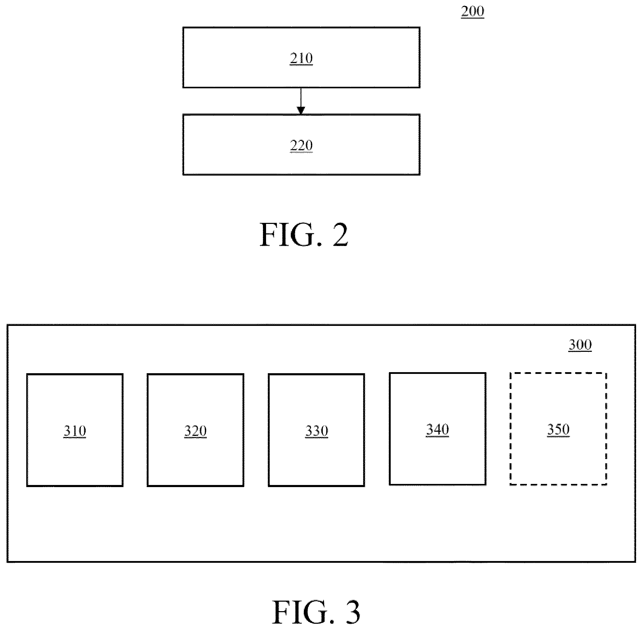

FIG. 2 is a flow diagram of a method 200 for calibrating the intrinsic parameters and the extrinsic parameters of the cameras according to an embodiment of the present invention. As shown in FIG. 2, the method 200 for calibrating the intrinsic parameters and the extrinsic parameters of the cameras includes:

Step 210, the plurality of cameras are calibrated to obtain the intrinsic parameter of each camera.

Each camera may be calibrated by adopting a Zhang's calibration method to obtain the intrinsic parameter of each camera. An example process of the Zhang's calibration method is as follows: (1) a plurality of calibration target images are shot from different angles of view; (2) feature points in the images are detected; and (3) the intrinsic parameters of the cameras are solved by simultaneous equations according to coordinate positions of the feature points in a world coordinate system and corresponding pixel coordinates thereof in the images, the intrinsic parameters of the cameras are a 3*3 matrix K.

Accordingly, an intrinsic parameter K0 of the camera Cam0, an intrinsic parameter K1 of the camera Cam1, an intrinsic parameter K2 of the camera Cam2, and an intrinsic parameter K3 of the camera Cam3 may be obtained.

Step 220, the extrinsic parameters of each camera are obtained by utilizing the intrinsic parameter of each camera.

After a calibration image of each camera relative to a calibration target is obtained, the extrinsic parameters of each camera relative to the calibration target are calculated respectively by utilizing the intrinsic parameter and the calibration image of each camera. The extrinsic parameters of the cameras describe relative positions and poses of the cameras relative to a reference object, and are each composed of a rotation matrix $R(\theta_x, \theta_y, \theta_z)$ and a translation vector $T(t_x, t_y, t_z)$. A method for calculating the extrinsic parameters of the cameras relative to the calibration target by using the intrinsic parameters of the cameras and the images of the calibration target shot by the cameras includes, but not limited to, a P3P algorithm, an EPnP algorithm, a UPnP algorithm, etc.

Accordingly, extrinsic parameters R0 and T0 of the camera Cam0, extrinsic parameters R1 and T1 of the camera Cam1, extrinsic parameters R2 and T2 of the camera Cam2, as well as extrinsic parameters R3 and T3 of the camera Cam3 may be obtained.

Step 130, image segmentation is conducted on the N images by utilizing a trained Mask-RCNN model to obtain two-dimensional regions of interest.

The Mask-RCNN model adds a branch network on the basis of a target detection Faster-RCNN, and segments target pixels while implementing target detection. In target detection, each candidate object has two outputs, namely a class label and bounding-box offset. The Mask-RCNN model adds a third branch of an output object mask (binary mask) on this basis, and thus may extract a finer spatial layout of the object.

In the present embodiment, the Mask-RCNN model may be trained by adopting a data set of more than 1,500 images. Training the Mask-RCNN model may include: (1) marking is conducted, a type of an object needs to be identified is marked, including contour marks and type labels of the object, and marked images are processed to generate marks, which are finally converted into a file format needed in training; and (2) converted images files are divided into a training set and a test set, the Mask-RCNN model is trained by utilizing the training set, and the trained Mask-RCNN model is tested by utilizing the test set.

The N images are input to the trained Mask-RCNN model, and the Mask-RCNN model conducts image segmentation on the images, so that two-dimensional regions of interest (ROI) may be obtained. In the embodiment of the present invention, four images img1, img2, img3 and img4 are input to the trained Mask-RCNN model to obtain four two-dimensional regions of interest ROI1, ROI2, ROI3 and ROI4 respectively.

Step 140, the corresponding two-dimensional regions of interest are projected into the world coordinate system by utilizing the intrinsic parameter and the extrinsic parameters of each camera to obtain world coordinates of three-dimensional feature points of the object, and reconstruction dimensions of the object are determined according to the world coordinates of the three-dimensional feature points.

In this step, pixel coordinates of the two-dimensional regions of interest are converted into camera coordinates Xc, Yc, Zc by utilizing the intrinsic parameter K of each camera, and then the camera coordinates Xc, Yc, Zc are converted into unified world coordinates Wx, Wy, Wz by utilizing the extrinsic parameters (the rotation matrix R and the translation vector T) of each camera.

Xc, Yc, Zc represent for coordinates of any position under a camera coordinate system. Wx, Wy, Wz represent for coordinates of the world coordinate system corresponding thereto. A transformation relationship between the two is shown in equation (1).

$$\begin{bmatrix} X_W \\ Y_W \\ Z_W \end{bmatrix} = R \begin{bmatrix} X_C \\ Y_C \\ Z_C \end{bmatrix} + T \quad (1)$$

$$R = (\theta_x, \theta_y, \theta_z) \quad (2)$$

$$T = (t_x, t_y, t_z) \quad (3)$$

R is a rotation matrix. T is a translation vector. The rotation matrix R is composed of three rotation variables $\theta_x$, $\theta_y$, $\theta_z$. The translation vector T is composed of three translation variables $t_x$, $t_y$, $t_z$.

In the embodiment of the present invention, the region of interest ROI0 is projected into the world coordinate system by utilizing the intrinsic parameter K0 and the extrinsic parameters R0 and T0 of the camera Cam0 to obtain the world coordinates of the three-dimensional feature points of the object. Correspondingly, world coordinates of three-dimensional feature points corresponding to the regions of interest ROI1, ROI2 and ROI3 may be obtained, and these three-dimensional feature points are located in the unified world coordinate system.

After the world coordinates of the three-dimensional feature points of the object are obtained, the reconstruction dimensions of the object may be determined according to the world coordinates of the three-dimensional feature points. For example, for an object similar to a cuboid, a reconstruction length, a reconstruction width and a reconstruction height of the object may be determined according to the world coordinates of the three-dimensional feature points. In the embodiment of the present invention, the three-dimensional feature points are configured to represent for three-dimensional features of the object. The three-dimensional feature points may be vertexes of the cuboid, and may also be centers of circles of circle points.

The flow diagram is used to be configured to describe operations performed by the method according to the embodiment of the present application herein. It should be understood that the foregoing operations may not be performed accurately according to the order. On the contrary, the steps may be processed according to a reverse order or various steps may be processed simultaneously. At the same time, or other operations are added into these processes, or one or multiple operations are removed from these processes. For example, the camera calibration step (step 120) may be performed after the image segmentation step (step 130).

In an embodiment of the present invention, homograph and texture-gradient analysis are conducted on the three-dimensional feature points after the world coordinates of the three-dimensional feature points of the object are obtained.

A homography matrix H may be solved through direct linear transformation (DLT), and homograph is conducted on the three-dimensional feature points by utilizing the homography matrix H to obtain a regular shape. Afterwards, texture-gradient analysis is conducted on the three-dimensional feature points after homograph. Texture-gradient analysis may obtain texture information and gradient information. More accurate three-dimensional feature points may be obtained according to the texture information and the gradient information. Conducting homograph and texture-gradient analysis on the three-dimensional feature points may exclude pseudo three-dimensional feature points and improve accuracy of the three-dimensional feature points, and thus improving the accuracy of measurement.

After the reconstruction dimensions of the object are determined, the object measurement method in the embodiment of the present invention may further include: predetermined dimensions of the object are obtained, and the object is evaluated according to magnitude relationships between the reconstruction dimensions and the predetermined dimensions.

Specifically, the predetermined dimensions may be a single dimension (such as a length), and may also be multidimensional dimensions (such as the length, a width and a height). The predetermined dimensions may be maximum dimensions, and may also be minimum dimensions. Taking the maximum dimensions as an example, the reconstruction dimensions are compared with the maximum dimensions. If the reconstruction dimensions are less than the maximum dimensions, the dimensions of the object are affirmed to be qualified. If the reconstruction dimensions are greater than the maximum dimensions, the dimensions of the object are affirmed to be unqualified. Such method may be configured to judge whether products on an assembly line meet production requirements or not.

As an embodiment of the present invention, the object may be a cargo. The reconstruction dimensions of the cargo include a reconstruction length, a reconstruction width and a reconstruction height. The object measurement method may further include: a predetermined length, a predetermined width and a predetermined height of the object are obtained, and whether the cargo meets transportation requirements or not is evaluated according to a magnitude relationship between the reconstruction length and the predetermined length, a magnitude relationship between the reconstruction width and the predetermined width, as well as a magnitude relationship between the reconstruction height and the predetermined height.

Specifically, when the reconstruction length, the reconstruction width and the reconstruction height are all less than the predetermined length, the predetermined width and the predetermined height, the cargo is affirmed to meet the transportation requirements, and otherwise, the cargo is affirmed not to meet the transportation requirements. Since a transportation space is limited during cargo transportation, when any one of the length, width and height of the cargo exceeds a dimensionality of the transportation space, the cargo cannot be loaded to make previous package work vain. The length, width and height of the cargo are obtained by automatically measuring the cargo, so that whether the cargo meets the transportation requirements or not may be evaluated, and previous unnecessary package is avoided.

The embodiment of the present invention provides an object measurement method, which conducts image segmentation by utilizing a Mask-RCNN model, so that precision and accuracy of image segmentation may be improved, and measurement cost is reduced simultaneously. Segmented images are mapped into a unified world coordinate system by utilizing intrinsic parameters and extrinsic parameters of cameras to determine reconstruction dimensions of an object, so that low-cost high-precision measurement is realized, and cost performance of measurement is improved.

The present invention further provides an object measurement device 300. As shown in FIG. 3, the object measurement device 300 includes an image obtaining unit 310, a camera calibrating unit 320, an image segmentation unit 330 and a calculation unit 340.

The image obtaining unit 310 obtains N images of an object at a same time from different angles of view, N is a natural number greater than 3, and the N images are shot by a plurality of cameras. The camera calibrating unit 320 calibrates the plurality of cameras to obtain an intrinsic parameter and extrinsic parameters of each camera. The image segmentation unit 330 conducts image segmentation on the N images by utilizing a trained Mask-RCNN model to obtain two-dimensional regions of interest. The calculation unit 340 projects the corresponding two-dimensional regions of interest into a world coordinate system by utilizing the intrinsic parameter and the extrinsic parameters of each camera to obtain world coordinates of three-dimensional feature points of the object, and determines reconstruction dimensions of the object according to the world coordinates of the three-dimensional feature points.

In an embodiment, the calculation unit 340 conducts homograph and texture-gradient analysis on the three-dimensional feature points after obtaining the world coordinates of the three-dimensional feature points of the object.

In an embodiment, the object measurement device 300 further includes an evaluation unit 350. The evaluation unit 350 obtains predetermined dimensions of the object; and evaluates the object according to magnitude relationships between the reconstruction dimensions and the predetermined dimensions.

In an embodiment, the evaluation unit 350 is a cargo evaluation unit. The reconstruction dimensions include a reconstruction length, a reconstruction width and a reconstruction height. The cargo evaluation unit obtains a predetermined length, a predetermined width and a predetermined height of the object; and evaluates whether the cargo meets transportation requirements or not according to a magnitude relationship between the reconstruction length and the predetermined length, a magnitude relationship between the reconstruction width and the predetermined width as well as a magnitude relationship between the reconstruction height and the predetermined height.

In an embodiment, calibrating the plurality of cameras by the camera calibrating unit 320 to obtain the intrinsic parameter and the extrinsic parameters of each camera includes: the plurality of cameras are calibrated to obtain the intrinsic parameter of each camera; and the extrinsic parameters of each camera are obtained by utilizing the intrinsic parameter of each camera.

For implementations of the object measurement device 300, reference may be made to the above, and the descriptions thereof are omitted herein.

Some aspects of the method and apparatus of the present invention may be entirely executed by hardware, may be entirely executed by software (including firmware, resident software, microcode, and the like), or may be executed by a combination of hardware and software. The foregoing hardware or software may be referred to as "data block", "module", "engine", "unit", "component" or "system". A processor may be one or more application specific integrated circuits (ASIC), digital signal processors (DSP), digital signal processing devices (DSPD), programmable logic devices (PLD), field programmable gate arrays (FPGA), processors, controllers, microcontrollers, microprocessors, or a combination thereof. In addition, various aspects of the present invention may be embodied as computer products located in one or more computer-readable media, the product including a computer-readable program code. For example, the computer-readable medium may include, but is not limited to, a magnetic storage device (for example, a hard disk, a floppy disk, a magnetic tape ...), an optical disk (for example, a compact disk (CD), a digital versatile disk (DVD), ...), a smart card, and a flash memory device (for example, a card, a stick, a key driver, ...).

The computer-readable medium may include a propagation data signal including a computer program code, for example, on a baseband or as part of a carrier wave. The propagation signal may have a plurality of manifestations, including an electromagnetic form, an optical form, or an appropriate combination form. The computer-readable medium may be any computer-readable medium except a computer-readable storage medium, and the medium may be connected to an instruction execution system, apparatus, or device to implement functions of communication, propagation, or transmission. It should be understood that, although this specification is described according to various embodiments, not every embodiment includes only one independent technical solution. This specification is described in this way only for clarity, and a person skilled in the art should take this specification as a whole. The technical solutions in the embodiments may also be appropriately combined to form other embodiments that may be understood by a person skilled in the art.

The foregoing descriptions are merely exemplary specific embodiments of the present invention, but are not intended to limit the scope of the present invention. Any equivalent change, modification or combination made by a person skilled in the art without departing from the concept and principle of the present invention shall fall within the protection scope of the present invention.

**Claims**

1. An object measurement method (100), comprising:

   obtaining N images of an object at a same time from different angles of view, wherein N is a natural number greater than 3, and the N images are shot by a plurality of cameras (110);
   calibrating the plurality of cameras to obtain an intrinsic parameter and extrinsic parameters of each camera (120);
   conducting image segmentation on the N images by utilizing a trained Mask-RCNN model to obtain two-dimensional regions of interest (130); and
   projecting the corresponding two-dimensional regions of interest into a world coordinate system by utilizing the intrinsic parameter and the extrinsic parameters of each camera to obtain world coordinates of three-dimensional feature points of the object, and determining reconstruction dimensions of the object according to the world coordinates of the three-dimensional feature points (140).

2. The object measurement method according to claim 1, after obtaining the world coordinates of the three-dimensional feature points of the object, further comprising:
   conducting homograph and texture-gradient analysis on the three-dimensional feature points.

3. The object measurement method according to claim 2, further comprising:

   obtaining predetermined dimensions of the object; and
   evaluating the object according to magnitude relationships between the reconstruction dimensions and the predetermined dimensions.

4. The object measurement method according to claim 3, wherein the object is a cargo, the reconstruction dimensions comprise a reconstruction length, a reconstruction width and a reconstruction height, and the object measurement method further comprises:

   obtaining a predetermined length, a predetermined width and a predetermined height of the object; and

evaluating whether the cargo meets transportation requirements or not according to a magnitude relationship between the reconstruction length and the predetermined length, a magnitude relationship between the reconstruction width and the predetermined width as well as a magnitude relationship between the reconstruction height and the predetermined height.

5. The object measurement method according to claim 1, wherein calibrating the plurality of cameras to obtain the intrinsic parameter and the extrinsic parameters of each camera comprises:

calibrating the plurality of cameras to obtain the intrinsic parameter of each camera (210); and obtaining the extrinsic parameters of each camera by utilizing the intrinsic parameter of each camera (220).

6. An object measurement device (300), comprising:

an image obtaining unit (310), configured to obtain N images of an object at a same time from different angles of view, wherein N is a natural number greater than 3, and the N images are shot by a plurality of cameras;
a camera calibrating unit (320), configured to calibrate the plurality of cameras to obtain an intrinsic parameter and extrinsic parameters of each camera;
an image segmentation unit (330), configured to conduct image segmentation on the N images by utilizing a trained Mask-RCNN model to obtain two-dimensional regions of interest; and
a calculation unit (340), configured to project the corresponding two-dimensional regions of interest into a world coordinate system by utilizing the intrinsic parameter and the extrinsic parameters of each camera to obtain world coordinates of three-dimensional feature points of the object, and determine reconstruction dimensions of the object according to the world coordinates of the three-dimensional feature points.

7. The object measurement device according to claim 6, wherein the calculation unit conducts homograph and texture-gradient analysis on the three-dimensional feature points after obtaining the world coordinates of the three-dimensional feature points of the object.

8. The object measurement device according to claim 7, further comprising an evaluation unit (350), the evaluation unit (350) is configured to obtain predetermined dimensions of the object; and evaluate the object according to magnitude relationships between the reconstruction dimensions and the predetermined dimensions.

9. The object measurement device according to claim 8, wherein the evaluation unit (350) is a cargo evaluation unit, the reconstruction dimensions comprise a reconstruction length, a reconstruction width and a reconstruction height, and
the cargo evaluation unit obtains a predetermined length, a predetermined width and a predetermined height of the object; and
evaluates whether the cargo meets transportation requirements or not according to a magnitude relationship between the reconstruction length and the predetermined length, a magnitude relationship between the reconstruction width and the predetermined width as well as a magnitude relationship between the reconstruction height and the predetermined height.

10. The object measurement device according to claim 6, wherein calibrating the plurality of cameras by the camera calibrating unit to obtain the intrinsic parameter and the extrinsic parameters of each camera comprises:

calibrating the plurality of cameras to obtain the intrinsic parameter of each camera; and obtaining the extrinsic parameters of each camera by utilizing the intrinsic parameter of each camera.

11. An electronic device, comprising a processor, a memory and an instruction stored in the memory, wherein the object measurement method according to any one of claims 1 to 5 is performed when the instruction is operated by the processor.

12. A computer readable storage medium, storing a computer instruction, wherein the object measurement method according to any one of claims 1 to 5 is performed when the computer instruction is operated.

<u>100</u>

```
┌─────────────────────────────┐
│                             │
│           110               │
│                             │
└─────────────────────────────┘
              │
              ▼
┌─────────────────────────────┐
│                             │
│           120               │
│                             │
└─────────────────────────────┘
              │
              ▼
┌─────────────────────────────┐
│                             │
│           130               │
│                             │
└─────────────────────────────┘
              │
              ▼
┌─────────────────────────────┐
│                             │
│           140               │
│                             │
└─────────────────────────────┘
```

# FIG. 1

200

210

220

# FIG. 2

300

310    320    330    340    350

# FIG. 3

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RAAJ YAADHAV ET AL: "Precise Measurement of Cargo Boxes for Gantry Robot Palletization in Large Scale Workspaces Using Low-Cost RGB-D Sensors", 12 March 2017 (2017-03-12), BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, XP047407086, ISBN: 978-3-642-17318-9 [retrieved on 2017-03-12] * abstract * * figures 1,9 * * Section 1.1 * * Section 3 * * Section 4.1; paragraph [0001] * * Section 5.3 * ----- | 1-12 | INV. G06T7/62 G06T7/60 G06T7/70 G06T7/80 G06T7/11 G06T7/55 G01B21/02 |
| Y | CN 109 215 085 A (SHANGHAI XIAOMENG TECH CO LTD) 15 January 2019 (2019-01-15) * abstract * * paragraph [0002] - paragraph [0020] * ----- | 1-12 | TECHNICAL FIELDS SEARCHED (IPC) G06T G01B |
| Y | CN 109 801 365 A (SHANGHAI XIAOMENG TECH CO LTD) 24 May 2019 (2019-05-24) * abstract * * paragraph [0003] - paragraph [0040] * * paragraph [0082] * ----- -/-- | 1-12 | |

The present search report has been drawn up for all claims

| Place of search | Date of completion of the search | Examiner |
|---|---|---|
| Munich | 30 September 2020 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GENÉ-MOLA JORDI ET AL: "Fruit detection and 3D location using instance segmentation neural networks and structure-from-motion photogrammetry", COMPUTERS AND ELECTRONICS IN AGRICULTURE, ELSEVIER, AMSTERDAM, NL, vol. 169, 2 January 2020 (2020-01-02), XP085987527, ISSN: 0168-1699, DOI: 10.1016/J.COMPAG.2019.105165 [retrieved on 2020-01-02] * abstract * * Section 2.1 * * Section 2.2 * * Sections 4, 5 * | 1,6,11, 12 | |
| A | ----- US 2014/210950 A1 (ATANASSOV KALIN MITKOV [US] ET AL) 31 July 2014 (2014-07-31) * abstract * * figures 1, 6 * * paragraph [0025] - paragraph [0038] * * paragraph [0047] * * paragraph [0077] * * paragraph [0082] - paragraph [0083] * * paragraph [0087] * ----- | 1-12 | TECHNICAL FIELDS SEARCHED (IPC) |

The present search report has been drawn up for all claims

| Place of search | Date of completion of the search | Examiner |
|---|---|---|
| Munich | 30 September 2020 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2020

| Patent document cited in search report | | Publication date | Patent family member(s) | Publication date |
|---|---|---|---|---|
| CN 109215085 | A | 15-01-2019 | NONE | |
| CN 109801365 | A | 24-05-2019 | NONE | |
| US 2014210950 | A1 | 31-07-2014 | NONE | |

EPO FORM P0459

For more details about this annex : see Official Journal of the European Patent Office, No. 12/82